(19) Europäisches Patentamt
European Patent Office
Office européen des brevets

(11) **EP 4 133 258 B1**

(12) **EUROPÄISCHE PATENTSCHRIFT**

(45) Veröffentlichungstag und Bekanntmachung des Hinweises auf die Patenterteilung:
**13.03.2024 Patentblatt 2024/11**

(21) Anmeldenummer: **21716275.9**

(22) Anmeldetag: **22.03.2021**

(51) Internationale Patentklassifikation (IPC):
**G01N 21/41** *(2006.01)*

(52) Gemeinsame Patentklassifikation (CPC):
**G01N 21/4133**

(86) Internationale Anmeldenummer:
**PCT/EP2021/057278**

(87) Internationale Veröffentlichungsnummer:
**WO 2021/204524 (14.10.2021 Gazette 2021/41)**

(54) **VERFAHREN UND VORRICHTUNG ZUM BESTIMMEN FREQUENZABHÄNGIGER BRECHUNGSINDIZES**

METHOD AND DEVICE FOR DETERMINING FREQUENCY-DEPENDENT REFRACTIVE INDICES

PROCÉDÉ ET DISPOSITIF DE DÉTERMINATION D'INDICES DE RÉFRACTION DÉPENDANT DE LA FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2020 DE 102020109742**

(43) Veröffentlichungstag der Anmeldung:
**15.02.2023 Patentblatt 2023/07**

(73) Patentinhaber: **Hochschule Düsseldorf**
**40476 Düsseldorf (DE)**

(72) Erfinder: **BRAUN, Alexander**
**45149 Essen (DE)**

(74) Vertreter: **Michalski Hüttermann & Partner Patentanwälte mbB**
**Kaistraße 16A**
**40221 Düsseldorf (DE)**

(56) Entgegenhaltungen:
**WO-A1-02/29358      GB-A- 2 487 311**
**US-A- 2 483 102**

**Beschreibung**

Die Erfindung betrifft ein Verfahren zum Bestimmen frequenzabhängiger Brechungsindizes einer Materialprobe.

Weiterhin betrifft die Erfindung eine Vorrichtung zur Durchführung des obigen Verfahrens.

Der Brechungsindex ist eine optische Materialeigenschaft, der das Verhältnis der Wellenlänge des Lichts im Vakuum zur Wellenlänge des Lichtes im Material, und damit auch der Phasengeschwindigkeit des Lichts im Vakuum zu der im Material angibt. Der Brechungsindex ist von der Frequenz des Lichtes abhängig, wobei dies als Dispersion bezeichnet wird.

An der Grenzfläche zweier Medien unterschiedlicher Brechungsindizes wird Licht gebrochen und reflektiert. Das Brechungsgesetz beschreibt die Richtungsänderung der Ausbreitungsrichtung einer ebenen Welle beim Übergang in das andere Medium. Diese Eigenschaft machen sich Vorrichtungen zur Bestimmung des Brechungsindex, sprich Refraktometer, zu nutzen.

Im Prinzip existieren drei unterschiedlichen Messmethoden, um den Brechungsindex von optischen Materialien zu bestimmen: Durchlicht, streifender Einfall und Totalreflexion, wobei allen Messmethoden gemein ist, dass ein Messprisma mit bekanntem Brechungsindex, das sogenannte Referenzprisma, verwendet wird.

Bei Totalreflexions-Refraktometern, die den Brechungsindex über Totalreflexion bestimmen, kann durch Verwenden polychromatischen Lichtes die Abbe-Zahl bestimmt werden. Mittels der Abbe-Zahl können die frequenzabhängigen Brechungsindizes allerdings nur abgeschätzt werden. Weiterhin schränken die bei den Totalreflexions-Refraktometern eingesetzten Kontaktflüssigkeiten den Arbeitsbereich und die Materialauswahl sehr stark ein.

Bei den Differential-Refraktometern mit Goniometern und bei Prismenspektrometern, die den Brechungsindex über Durchlicht bestimmen, können die frequenzabhängigen Brechungsindizes durch Verwenden von monochromatischem Licht unterschiedlicher Wellenlänge bestimmt werden. Hierzu muss für jede verwendetet Wellenlängen der Brechungsindex einzeln bestimmt werden, also ein Wellenlängen-Scan durchgeführt werden, was zeitaufwändig ist. Weiterhin muss die verwendete Wellenlänge genau bekannt sein, so dass eine Kalibrierung der Wellenlänge der verwendeten Strahlung durchgeführt werden muss.

Die US 2 483 102 A beschreibt ein Verfahren zur Ausnutzung von Änderungen des Brechungsindex einer Flüssigkeit zur Steuerungszwecken. Dabei wird ein kollimierter Lichtstrahl durch eine Flüssigkeit geleitet.

Die GB 2487311 A betrifft eine Flüssigkeitsunterscheidungsvorrichtung, die eine Flüssigkeitsprüfeinrichtung umfasst, wobei die Flüssigkeitsprüfeinrichtung eine Lichtquelle, einen Detektor und ein optisches Element umfasst. Die Prüfeinrichtung ist derart betreibbar ist, dass ein Lichtstrahl von der Lichtquelle durch das optische Element zu einer Inspektionsfläche des optischen Elements geleitet wird.

Die WO 02/29358 A1 beschreibt ein Verfahren zum Bestimmen der Dicke und des Brechungsindex eines optischen Dünnfilms. Das Verfahren umfasst das Erzeugen eines diagnostischen Lichtstrahls mit einer ersten und einer zweiten Wellenlänge. Das Verfahren umfasst auch das Messen von ungedämpften Lichtintensitäten bei der ersten und der zweiten Wellenlänge des diagnostischen Lichtstrahls. Das Verfahren umfasst auch das Messen von abgeschwächten Lichtintensitäten bei der ersten und der zweiten Wellenlänge des diagnostischen Lichtstrahls nach dem Durchgang durch den optischen Dünnfilm. Eine Null-Lichtintensität für den diagnostischen Lichtstrahl bei der ersten und zweiten Wellenlänge wird ebenfalls bestimmt. Eine erste und zweite normierte Intensitätsfunktion werden unter Verwendung der gemessenen Intensitäten des ungedämpften Lichts, der gemessenen Intensitäten des gedämpften Lichts und der gemessenen Intensitäten des Nulllichts bestimmt. Die Dicke und der Brechungsindex des optischen Dünnfilms werden dann bestimmt, indem die erste und die zweite normalisierte Intensitätsfunktion nach Dicke und Brechungsindex aufgelöst werden.

Demnach ist es die Aufgabe der Erfindung, ein Verfahren und eine Vorrichtung zum Bestimmen der frequenzabhängigen Brechungsindizes, sprich der Dispersion, bereitzustellen, bei denen ohne Einsatz eines Referenzprismas und ohne Durchführung eines Wellenlängen-Scans während des Verfahrens, die frequenzabhängigen Brechungsindizes schnell und präzise bestimmt werden können.

Diese Aufgabe wird durch die Merkmale der unabhängigen Patentansprüche gelöst. Bevorzugte Weiterbildungen finden sich in den Unteransprüchen.

Erfindungsgemäß wird also ein Verfahren zum Bestimmen frequenzabhängiger Brechungsindizes einer Materialprobe bereitgestellt, umfassend die Schritte

a) Bereitstellen der Materialprobe, wobei die Materialprobe wenigstens eine Eintrittseite und eine Austrittseite aufweist,

b) Bestrahlen der Eintrittseite mit kollimiertem, polychromatischem Licht aufweisend eine spektrale Intensitätsverteilung mittels einer Strahlungsquelle,

c) Erfassen einer räumlichen Intensitätsverteilung des Lichtes auf der Austrittseite mittels eines in einer Ausbreitungsebene ortsauflösenden Detektors,

d) Ermitteln der frequenzabhängigen Brechungsindizes der Materialprobe durch Vergleichen der spektralen Intensitätsverteilung mit der erfassten räumlichen Intensitätsverteilung mittels einer Recheneinheit unter Berücksichtigung einer geometrischen Form der Materialprobe und einer Anordnung der Strahlungsquelle, der Materialprobe und des Detektors zueinander.

Der Kern der Erfindung liegt darin, dass nicht wie im Stand der Technik die frequenzabhängigen Brechungsindizes mittels eines Referenzprismas und/oder eines Wellenlängen-Scans mit kalibrierten Wellenlängen ermittelt werden, sondern dass die frequenzabhängigen Brechungsindizes direkt an der Materialprobe ermittelt werden, indem die spektrale Intensitätsverteilung des Lichtes vor Eintritt in die Materialprobe mit der räumlichen Intensitätsverteilung des Lichtes nach Austritt aus der Materialprobe verglichen wird. Bevorzugt umfasst das Vergleichen der spektralen Intensitätsverteilung mit der räumlichen Intensitätsverteilung ein Vergleichen der Form der beiden Intensitätsverteilungen, also das Vergleichen des relativen Verhältnisses der Intensität pro Wellenlänge (Form der spektralen Intensitätsverteilung) mit dem relativen Verhältnis der Intensität pro Detektionsort (Form der räumlichen Intensitätsverteilung). Unter Vergleichen ist bevorzugt ein Feststellen von Gemeinsamkeiten und Unterschieden zwischen der relativen Intensität der spektralen Intensitätsverteilung und der relativen Intensität der räumlichen Intensitätsverteilung zu verstehen. In anderen Worten beruht das Verfahren darauf, dass die Veränderung der Form der Intensitätsverteilung, sprich die Abnahme oder Zunahme der relativen Intensität, von den frequenzabhängigen Brechungsindizes abhängt. Somit entfällt eine aufwändige Kalibrierung der Wellenlänge während des Verfahrens über das Referenzprisma genauso wie ein Wellenlängen-Scan. Die Vergleichbarkeit der spektralen Intensitätsverteilung mit der räumlichen Intensitätsverteilung wird bevorzugt dadurch hergestellt, dass die eine Intensitätsverteilung jeweils unter Zuhilfenahme eines physikalischen Modells, in welches die Form der Materialprobe und die Anordnung der Strahlungsquelle, der Materialprobe und des Detektors zueinander einfließt, aus der anderen Intensitätsverteilung ermittelt werden kann.

Das erfindungsgemäße Verfahren schlägt in einem ersten Schritt vor, die Materialprobe bereitzustellen. Bei der Materialprobe handelt es sich um eine Materialprobe mit der geometrischen Form, wobei die Materialprobe wenigstens die Eintrittseite und die Austrittseite aufweist. Grundsätzlich kann die Materialprobe jede geometrische Form mit einer Ein- und Austrittseite aufweisen. Die Ein- und Austrittseite kann grundsätzlich jede geometrische Form aufweisen, also beispielsweise gebogen oder gewinkelt sein. Bevorzugt ist jedoch vorgesehen, dass die Ein- und Austrittseite jeweils eine plane Fläche der Materialprobe ist, die in ihrer Ausdehnung wenigstens so groß ist, dass das Licht über die plane Fläche der Eintrittseite in die Probe eintreten und über die plane Fläche der Austrittseite aus der Probe austreten kann.

Die Materialprobe kann grundsätzlich jeden Aggregatzustand aufweisen, also beispielsweis fest oder flüssig sein. Bei einer flüssigen Materialprobe ist bevorzugt ein formgebender Hilfskörper vorgesehen, der der flüssigen Materialprobe die geometrische Form vorgibt und eine Ein- und Austrittseite aufweist. Beispielsweise kann eine Küvette mit der geometrischen Form als Hilfskörper vorgesehen sein. Bevorzugt ist bei Verwendung eines Hilfskörpers vorgesehen, dass optische Eigenschaften wie Brechungsindizes und Absorption des Hilfskörpers bekannt sind und bei der Ermittlung der frequenzabhängigen Brechungsindices berücksichtigt werden.

In einem weiteren Schritt des Verfahrens wird die Eintrittseite der Materialprobe mittels der Strahlungsquelle mit dem kollimierten, polychromatischen Licht bestrahlt. Kollimiert bedeutet im Sinne der Erfindung, dass das Licht als paralleles Strahlenbündel auf die Eintrittseite der Materialprobe trifft. Polychromatisches Licht bedeutet im Sinne der Erfindung, dass es sich nicht um Licht mit einer spektralen Intensitätsverteilung handelt, welche ausschließlich aus einem schmalbandigen Spektrum einer Wellenlänge besteht, sondern dass die spektrale Intensitätsverteilung des Lichtes wenigstens drei getrennte schmalbandige Spektren unterschiedlicher Wellenlängen umfasst. Unter einem schmalbandigen Spektrum wird ein Spektrum mit einer Halbwertsbreite von nicht mehr als 25 nm verstanden, wobei zwei schmalbandige Spektren voneinander getrennt sind, wenn ihre Maxima wenigstens um die volle Halbwertsbreite auseinander liegen. Bevorzugt bedeutet polychromatisches Licht, dass die spektrale Intensitätsverteilung des Lichtes lückenlos den gesamten Frequenzbereich, in dem die frequenzabhängigen Brechungsindizes ermittelt werden, abdeckt.

Das kollimierte, polychromatische Licht kann grundsätzlich schon in dieser Form, sprich kollimiert und polychromatisch, von der Strahlungsquelle erzeugt werden oder durch optische Vorrichtungen kollimiert und/oder in polychromatisches Licht überführt werden. Beim Bestahlen der Materialprobe breitet sich das kollimierte, polychromatische Licht in der Ausbreitungsebene aus und tritt an der Eintrittseite in die Materialprobe ein. Als Folge davon tritt Licht an der Austrittseite aus der Materialprobe aus. Nach Austritt aus der Materialprobe ist das Licht nicht kollimiert. Die Strahlenbündel des Lichtes sind also nach Austritt aus der Materialprobe nicht mehr parallel zueinander, sondern weisen eine Winkelverteilung auf. Beispielsweise kreuzen sich die Strahlenbündel des Lichtes oder sie fächern sich in der Ausbreitungsebene auf. In einer bevorzugten Ausführungsform ist das Licht nach Austritt aus der Materialprobe divergent.

In einem weiteren Schritt des Verfahrens wird die räumlichen Intensitätsverteilung des Lichtes erfasst. Dafür wird der in der Ausbreitungsebene ortsauflösende Detektor verwendet, wobei der Detektor dazu ausgestaltet ist, die Intensität der Strahlenbündel des Lichtes zu erfassen. Bevorzugt handelt es sich um einen in eine Raumrichtung ortsauflösenden Detektor. In einer bevorzugten Ausführungsform wird die räumliche Intensitätsverteilung des sich in der Ausbreitungsebene divergierenden Lichtes erfasst.

In einem weiteren Schritt des Verfahrens werden mittels der Recheneinheit durch Vergleichen der spektralen Intensitätsverteilung mit der erfassten räumlichen Intensitätsverteilung die frequenzabhängigen Brechungsindizes der Materialprobe ermittelt, wobei dabei die geometrische Form der Materialprobe und die Anordnung der Strahlungsquelle, der Materialprobe und des Detektors zueinander berücksichtig werden.

Hinsichtlich der Form der Materialprobe ist bevorzugt vorgesehen, dass ein Winkel zwischen der Eintrittseite und der Austrittseite der Materialprobe beim Ermitteln der frequenzabhängigen Brechungsindizes berücksichtigt wird. Hinsichtlich der Anordnung der Strahlungsquelle, der Materialprobe und des Detektors zueinander ist bevorzugt vorgesehen, dass das Licht in der Ausbreitungsebene mit einem Einfallswinkel auf die Eintrittseite der Materialprobe trifft und der Detektor bevorzugt in der Ausbreitungsebene zur Austrittseite der Materialprobe mit einem Detektorwinkel angeordnet ist. Bevorzugt bezieht sich der Detektorwinkel auf den Winkel zwischen der Austrittseite der Materialprobe und der Raumrichtung, in die der Detektor ortsauflösend ist. Weiterhin umfasst die Anordnung der Strahlungsquelle, der Materialprobe und des Detektors zueinander ein Abstand des Detektors zur Austrittseite der Materialprobe. Bevorzugt werden durch das Verfahren also die frequenzabhängigen Brechungsindizes der Materialprobe unter Berücksichtigung des Winkels zwischen der Eintrittseite und der Austrittseite der Materialprobe, des Eintrittwinkels, des Detektorwinkels und des Abstandes zwischen Detektor und Austrittseite ermittelt.

Das Verfahren ermöglicht also die frequenzabhängigen Brechungsindizes direkt an der Materialprobe ohne Wellenlängen-Scan zu ermitteln. Somit ist das Verfahren besonders schnell. Insbesondere können durch das Verfahren die frequenzabhängigen Brechungsindizes im Sekundenbereich ermittelt werden, wobei anders als beim Wellenlängen-Scan der Frequenzbereich, über den die Brechungsindizes ermittelt werden, die Dauer nicht weiter beeinflusst. Die Dauer des Verfahrens hängt unter anderem von einer Rechenleistung der Recheneinheit, die zum Vergleichen der spektralen Intensitätsverteilung mit der erfassten räumlichen Intensitätsverteilung verwendet wird, ab. Weiterhin kann auf Bauteile für den Wellenlängen-Scan und auf das Referenzprisma verzichtet werden, so dass das Verfahren sehr robust gegen industrielle Produktionsumgebungen mit Störungen wie Lärm, Licht und/oder Wärme ist. Weiterhin ist die Durchführung des Verfahrens nur mit geringen Kosten verbunden. Weiterhin ist das Verfahren nicht auf einen bestimmten Wellenlängenbereich bzw. Frequenzbereich limitiert, so dass die frequenzabhängigen Brechungsindizes bei unterschiedlichen Frequenzen und von unterschiedlichen Materialproben ermittelt werden können. Somit ist das Verfahren auch sehr flexibel.

Damit eignet sich das Verfahren besonders, um beispielsweise Messreihen mit unterschiedlich hergestellten Materialproben zu realisiert, um derart eine Prozessoptimierung des Herstellungsprozesses zu ermöglichen. Weiterhin eignet sich das Verfahren aufgrund seiner hohen Robustheit auch zur In-line-Prozessüberwachung. Da das Verfahren sehr kostengünstig ist, ist es auch zum Aufbau einer Datenbank der frequenzabhängigen Brechungsindizes unterschiedlicher Materialien geeignet. Ebenfalls können durch das Verfahren der Einfluss von Umgebungsparametern der Materialprobe, wie beispielsweise die Temperatur, auf die frequenzabhängigen Brechungsindizes der Materialprobe ermittelt werden.

Wie bereits erwähnt ermöglicht das Verfahren das Bestimmen der frequenzabhängigen Brechungsindizes bei Materialproben, wobei die geometrische Form der Materialprobe berücksichtig wird. Grundsätzlich kann die Materialprobe jede Form mit der Eintrittseite und der Austrittseite aufweisen. Gemäß einer bevorzugten Weiterbildung der Erfindung ist allerdings vorgesehen, dass das Bereitstellen der Materialprobe, ein Bereitstellen einer Materialprobe in Form eines Prismas aufweisend ein Vieleck als Grundfläche umfasst, wobei die Eintrittseite und die Austrittseite der Materialprobe jeweils von einer Seitenfläche des Prismas gebildet ist. Unter Prisma wird ein geometrischer Körper verstanden, der durch Verschieben des in einer Ebene liegenden Vielecks als Grundfläche entlang einer nicht in dieser Ebene liegenden Geraden im Raum entsteht. Als Grundfläche weist das Prisma bevorzugt ein Dreieck auf. Weiter bevorzugt handelt es sich bei der Materialprobe um ein Dispersionsprisma, also beispielsweise um ein 60°/60°/60° Prisma, ein 30°/60°/90° Prisma, ein Pellin-Broca-Prisma oder ein Geradsichtprisma. Bei der Eintrittseite und der Austrittseite der Materialprobe handelt es sich bevorzugt nicht um die Grundflächen des Prismas, sondern um die Seitenflächen.

Nachdem das Licht der Strahlungsquelle durch die Materialprobe hindurchgetreten ist, wird es vom Detektor erfasst. In diesem Zusammenhang ist gemäß einer bevorzugten Weiterbildung der Erfindung vorgesehen, dass das Verfahren den Schritt Anordnen der Strahlungsquelle, der Materialprobe und/oder des Detektors derart, dass das Licht auf den Detektor trifft, umfasst. Insbesondere ist vorgesehen, dass die Strahlungsquelle, die Materialprobe und/oder der Detektor derart angeordnet werden, dass das in der Ausbreitungsebene divergierende Licht vollständig auf den Detektor trifft. Bevorzugt kann durch Variation des Abstandes des Detektors von der Austrittseite der Materialprobe, durch Variation des Eintrittwinkels, und/oder durch Variation des Detektorwinkels sichergestellt werden, dass das in der Ausbreitungsebene divergierende Licht vollständig auf den Detektor trifft.

Grundsätzlich ist es möglich, dass die spektrale Intensitätsverteilung des Lichtes der Strahlungsquelle bekannt ist und nicht erfasst werden muss. Allerdings ist gemäß einer bevorzugten Weiterbildung der Erfindung vorgesehen, dass das Verfahren den Schritt Erfassen der spektralen Intensitätsverteilung des Lichtes auf der Eintrittseite, mittels eines Spektrometers umfasst. Im Sinne der Erfindung ist mit Erfassen der spektralen Intensitätsverteilung des Lichtes auf der Eintrittseite nicht gemeint, dass das Spektrometer räumlich auf der Eintrittseite der Materialprobe angeordnet sein muss, sondern dass die spektrale Intensitätsverteilung des Lichtes, wie es auf die Eintrittseite der Materialprobe trifft, ermittelt wird. Beispielsweise kann ein Teil des Lichtes der Strahlungsquelle, statt auf die Eintrittseite der Materialprobe zu treffen, ausgekoppelt werden und dem Spektrometer zugeführt werden. Derart ist ein einfaches Ermitteln der spektralen Intensitätsverteilung des Lichtes möglich. Das Erfassen der spektralen Intensitätsverteilung des Lichtes auf der Eintrittseite mittels des Spektrometers macht das Ermitteln der frequenzabhängigen Brechungsindizes besonders genau. Grundsätzlich kann die spektrale Intensitätsverteilung des Lichtes der Strahlungsquelle aufgrund von verschiedenen Einflüssen wie Temperatur oder Spannungsversorgung der Strahlungsquelle Schwankungen unterliegen. Durch das Erfassen der spektralen Intensitätsverteilung während des Verfahrens durch auskoppeln eines Teils des Lichtes, können diese Schwankungen berücksichtig werden, so dass das Ermitteln der frequenzabhängigen Brechungsindizes besonders genau ist.

Gemäß einer bevorzugten Weiterbildung umfasst das Verfahren den Schritt Übertragen der erfassten räumlichen Intensitätsverteilung an die Recheneinheit. Bevorzugt ist hierfür der Detektor mit der Recheneinheit kommunikationstechnisch verbindbar und/oder verbunden. Weiterhin ist bevorzugt vorgesehen, dass die vom Spektrometer erfasste spektrale Intensitätsverteilung an die Recheneinheit übertragen wird. Hierfür ist ebenso bevorzugt vorgesehen, dass das Spektrometer mit der Recheneinheit kommunikationstechnisch verbindbar und/oder verbunden ist. Zwecks Ermittelns der frequenzabhängigen Brechungsindizes ist bevorzugt vorgesehen, dass die Anordnung der Strahlungsquelle, der Materialprobe und des Detektors zueinander und die Form der Materialprobe und/oder der Eintrittwinkel, der Detektorwinkel und der Winkel zwischen der Eintrittseite und der Austrittseite der Materialprobe an die Recheneinheit übertragen werden. Beispielsweise kann vorgesehen sein, dass die Materialprobe dreidimensional vermessen wird und/oder ein digitales Modell der Materialprobe der Recheneinheit zur Verfügung gestellt wird.

Hinsichtlich des Ermittelns der frequenzabhängigen Brechungsindizes ist gemäß einer bevorzugten Weiterbildung der Erfindung vorgesehen, dass der Schritt d) Ermitteln der frequenzabhängigen Brechungsindizes der Materialprobe durch Vergleichen der spektralen Intensitätsverteilung mit der erfassten räumlichen Intensitätsverteilung mittels der Recheneinheit unter Berücksichtigung der geometrischen Form der Materialprobe und der Anordnung der Strahlungsquelle, der Materialprobe und des Detektors zueinander ein Durchführen einer Ausgleichsrechnung umfasst. Wie bereits erwähnt wird bevorzugt die Form der spektralen Intensitätsverteilung mit der Form der räumlichen Intensitätsverteilung verglichen. Bevorzugt ist vorgesehen, dass das physikalische Modell einen funktionalen Zusammenhang zwischen der spektrale Intensitätsverteilung und der räumliche Intensitätsverteilung herstellt. Im Rahmen der Ausgleichsrechnung ist insbesondere vorgesehen, dass die spektrale Intensitätsverteilung rechnerisch an die räumliche Intensitätsverteilung angepasst wird und/oder dass die räumliche Intensitätsverteilung rechnerisch an die spektrale Intensitätsverteilung angepasst wird, wobei über die vorgenommene Anpassung die frequenzabhängigen Brechungsindizes ermittelt werden. In anderen Worten wird auf Basis der spektralen Intensitätsverteilung unter Berücksichtigung der geometrischen Form der Materialprobe und der Anordnung der Strahlungsquelle, der Materialprobe und des Detektors zueinander eine virtuelle räumliche Intensitätsverteilung errechnet, wobei freie Parameter angepasst werden, bis die virtuelle räumliche Intensitätsverteilung im Wesentlichen mit der erfassten räumlichen Intensitätsverteilung übereinstimmt oder es wird auf Basis der räumlichen Intensitätsverteilung unter Berücksichtigung der geometrischen Form der Materialprobe und der Anordnung der Strahlungsquelle, der Materialprobe und des Detektors zueinander eine virtuelle spektrale Intensitätsverteilung errechnet, wobei freie Parameter angepasst werden, bis die virtuelle spektrale Intensitätsverteilung im Wesentlichen mit der spektralen Intensitätsverteilung übereinstimmt. Weiterhin ist möglich, dass beide Anpassungen durchgeführt werden und die frequenzabhängigen Brechungsindizes aus einer Kombination beider Anpassungen ermittelt werden.

In diesem Zusammenhang ist gemäß einer weiteren bevorzugten Weiterbildung der Erfindung vorgesehen, dass der Schritt d) Ermitteln der frequenzabhängigen Brechungsindizes der Materialprobe durch Vergleichen der spektralen Intensitätsverteilung mit der erfassten räumlichen Intensitätsverteilung mittels der Recheneinheit unter Berücksichtigung der geometrischen Form der Materialprobe und der Anordnung der Strahlungsquelle, der Materialprobe und des Detektors zueinander ein Anpassen freier Parameter einer parametrischen Beschreibung des frequenzabhängigen Brechungsindex derart, dass die auf Basis der spektralen Intensitätsverteilung errechnete virtuelle räumliche Intensitätsverteilung mit der erfassten räumlichen Intensitätsverteilung im Wesentlichen übereinstimmt, umfasst.

In anderen Worten entspricht das Ermitteln der frequenzabhängigen Brechungsindizes bevorzugt dem Lösen eines mathematischen Optimierungsproblems, wobei die mathematisch zu minimierende Fehlerfunktion bevorzugt dem in einer geeigneten Abstandsmetrik beschriebenen Unterschied zwischen der errechneten virtuellen räumlichen Intensitätsverteilung und der erfassten räumliche Intensitätsverteilung entspricht. Als der in einer geeigneten Abstandsmetrik beschriebenen Unterschied kann beispielsweise die Differenz zwischen der errechneten virtuellen räumlichen Intensitätsverteilung und der erfassten räumliche Intensitätsverteilung oder der quadratische Abstand verwendet werden. Weiter bevorzugt wird zum Lösen des mathematischen Optimierungsproblems ein Gradientenabstiegsverfahren wie beispielsweise ein Trust-Region-Verfahren oder der Levenberg-Marquardt-Algorithmus, ein genetischer Algorithmus, ein auf maschinellem Lernen basierter Algorithmus, und/oder ein heuristisches Approximationsverfahren wie Simulated Annealing (simulierte Abkühlung) verwendet. Dementsprechend bedeutet Anpassen der freien Parameter derart, dass die errechnete virtuelle räumliche Intensitätsverteilung mit der erfassten räumlichen Intensitätsverteilung im Wesentlichen übereinstimmt im Sinne der Erfindung, dass der zum Lösen des Optimierungsproblems verwendete Algorithmus bei einer Lösung konvergiert ist und/oder sein Abbruchkriterium erreicht hat.

Gemäß einer weiteren bevorzugten Weiterbildung des Verfahrens ist vorgesehen, dass die parametrische Beschreibung des frequenzabhängigen Brechungsindex die Cauchy-Gleichung, die Sellmeier-Gleichung, die Schott-Briot-Gleichung und/oder das Modell des Lorentz-Oszillators umfasst.

Die Cauchy-Gleichung (1) ist eine empirisch ermittelte mathematische Beschreibung der Abhängigkeit des Brechungsindex n von der Wellenlänge $\lambda$ des Lichts in Festkörpern über einen großen Spektralbereich:

$$n(\lambda) = B_0 + \sum_{j=1}^{i} \frac{B_j}{\lambda^{2j}} \qquad (1)$$

Bevorzugt ist vorgesehen, dass die Cauchy-Gleichung nach den ersten zwei Gliedern abgebrochen wird (2), so dass nur drei freie Parameter, $B_0$, $B_1$, $B_2$, angepasst werden. Dies spart Rechenzeit ein und beschleunigt das Verfahren:

$$n(\lambda) = B_0 + \frac{B_1}{\lambda^2} + \frac{B_2}{\lambda^4} \qquad (2)$$

Die Sellmeier-Gleichung (3) ist ebenfalls eine empirisch ermittelte mathematische Beschreibung der Abhängigkeit des Brechungsindex n von der Wellenlänge $\lambda$ des Lichts:

$$n^2(\lambda) = 1 + \sum_{j=1}^{i} \frac{B_j \lambda^2}{\lambda^2 - C_j} \qquad (3)$$

Bevorzugt ist vorgesehen, dass die Sellmeier-Gleichung nach den ersten drei Gliedern abgebrochen wird (4), so dass sechs freie Parameter, $B_1$, $B_2$, $B_3$, $C_1$, $C_2$, und $C_3$ angepasst werden. Dies macht das Ermitteln der frequenzabhängigen Brechungsindizes besonders genau:

$$n^2(\lambda) = 1 + \frac{B_1 \lambda^2}{\lambda^2 - C_1} + \frac{B_2 \lambda^2}{\lambda^2 - C_2} + \frac{B_3 \lambda^2}{\lambda^2 - C_3} \qquad (4)$$

Gemäß einer weiteren bevorzugten Weiterbildung der Erfindung vorgesehen, dass der Schritt d) Ermitteln der frequenzabhängigen Brechungsindizes der Materialprobe durch Vergleichen der spektralen Intensitätsverteilung mit der erfassten räumlichen Intensitätsverteilung mittels der Recheneinheit unter Berücksichtigung der geometrischen Form der Materialprobe und der Anordnung der Strahlungsquelle, der Materialprobe und des Detektors zueinander ein Anpassen von Parametern der Anordnung der Strahlungsquelle, der Materialprobe und des Detektors zueinander und/oder der Form der Materialprobe umfasst.

Beim Lösen des mathematischen Optimierungsproblems ist es möglich, nicht nur die Parameter der parametrischen Beschreibung des frequenzabhängigen Brechungsindex als freie Parameter zu behandeln und beim Lösen des mathematischen Optimierungsproblems anzupassen, sondern auch die Parameter der Anordnung der Strahlungsquelle, der Materialprobe und des Detektors zueinander und/oder der Form der Materialprobe als freie Parameter zu behandeln. Bevorzugt ist vorgesehen, dass die Parameter der Anordnung der Strahlungsquelle, der Materialprobe und des Detektors zueinander und/oder der Form der Materialprobe in engen Grenzen zur Anpassung freigegeben werden, sodass Ungenauigkeiten beim Ermitteln dieser Parameter durch die Anpassung ausgeglichen werden. Insbesondere ist vorgesehen, dass die Parameter Winkel zwischen Eintrittseite und Austrittseite der Materialprobe, Eintittwinkel, Detektorwinkel und Abstand des Detektors zur Austrittseite in engen Grenzen zur Anpassung freigegeben werden. In engen Grenzen bedeutet im Sinne der Erfindung, dass diese Parameter bei der Anpassung im Rahmen ihrer Messgenauigkeit freigegeben werden.

Alternativ oder zusätzlich zu der oben genannten Art die Messungenauigkeit der Parameter der Anordnung der Strahlungsquelle, der Materialprobe und des Detektors zueinander und/oder der Form der Materialprobe zu berücksichtigen, kann über einen Kalibrierungsschritt die Messungenauigkeit besonders gering gehalten werden. Gemäß einer bevorzugten Weiterbildung der Erfindung ist vorgesehen, dass das Verfahren den Schritt Bestrahlen der Eintrittseite mit kollimiertem, monochromatischen Licht umfasst. Zur Kalibrierung ist also bevorzugt vorgesehen, dass schmalbandiges monochromatisches Licht verwendet wird. Über den schmalen Spektralbereich, bevorzugt kleiner 25 nm, variiert der Brechungsindex nur gering, so dass über den Detektionsort auf dem ortsauflösenden Detektor die Parameter der Anordnung der Strahlungsquelle, der Materialprobe und des Detektors zueinander und/oder die Parameter der Form der Materialprobe kalibriert werden können. Dies ist insbesondere Vorteilhaft, wenn auch für das monochromatische Licht in einem weiteren Schritt des Verfahrens die spektrale Intensitätsverteilung auf der Eintrittseite mittels des Spektrometers erfasst wird. Derart kann die Wellenlänge bzw. Frequenz des monochromatischen Lichtes sehr genau ermittelt werden, was für die Kalibrierung von Vorteil ist.

Gemäß einer weiteren bevorzugten Weiterbildung der Erfindung umfasst das Verfahren den Schritt Speichern der ermittelten frequenzabhängigen Brechungsindizes auf einem Speichermedium. Derart können die ermittelten frequenzabhängigen Brechungsindizes auf einfache Weise für weitere Verwendungen zur Verfügung gestellt werden.

Gemäß einer bevorzugten Weiterbildung der Erfindung ist vorgesehen, dass das Verfahren die Schritte

- Erfassen einer Absorption des Lichtes durch die Materialprobe und
- Berücksichtigen der erfassten Absorption beim Ermitteln der frequenzabhängigen Brechungsindizes umfasst.

Beim Durchtritt des Lichtes durch die Materialprobe können die unterschiedlichen Frequenzen bzw. Wellenlängen des polychromatischen Lichtes unterschiedlich stark von der Materialprobe absorbiert werden, was die Intensität des Lichtes hinter der Materialprobe beeinflusst. Bevorzugt ist vorgesehen, dass die Absorption beim Ermitteln der frequenzabhängigen Brechungsindizes berücksichtigt wird, was zu einer besonders genauen Ermittlung der frequenzabhängigen Brechungsindizes führt. Derart ist es auch möglich mittels des Verfahrens die frequenzabhängigen Brechungsindizes farbiger Materialien zu ermitteln. Bevorzugt ist vorgesehen, dass die Absorption der Materialprobe über einer Transmissionsmessung mittels eines Spektrometers ermittelt wird.

In diesem Zusammenhang ist weiterhin vorgesehen, dass beim Ermitteln der frequenzabhängigen Brechungsindizes bevorzugt eine Weglänge des Lichtes innerhalb der Materialprobe berücksichtigt wird. Aufgrund der geometrischen Form der Probe und/oder der Divergenz des Lichtes nach Eintritt in die Materialprobe kann die Weglänge des Lichtes für die unterschiedlichen Frequenzanteile des Lichtes unterschiedlich groß sein. Bevorzugt wird auch ein Absorptionseffekt, der durch die unterschiedlichen Weglängen innerhalb der Materialprobe verursacht wird, beim Ermitteln der frequenzabhängigen Brechungsindizes berücksichtigt. Weiter bevorzugt wird der Absorptionseffekt durch das Labert-Beer'sche Gesetzt berücksichtigt.

Gemäß einer weiteren bevorzugten Weiterbildung der Erfindung ist vorgesehen, dass beim Ermitteln der frequenzabhängigen Brechungsindizes ein Reflexions- und/oder Transmissionsgrad des Lichtes an der Eintrittseite und/oder Austrittseite berücksichtigt wird. Beim Eintritt des Lichtes in die Eintrittseite der Materialprobe und/oder beim Austritt des Lichtes aus der Austrittseite der Materialprobe kann ein Anteil des Lichtes an der Grenzfläche reflektiert werden statt durch die Grenzfläche hindurchzutreten. Dies beeinflusst die Intensität des Lichtes hinter der Materialprobe. Bevorzugt wird dieser Effekt mittels der fresnelschen Formel beim Ermitteln der frequenzabhängigen Brechungsindizes berücksichtig.

Gemäß einer weiteren bevorzugten Weiterbildung der Erfindung ist vorgesehen, dass das Verfahren die Schritte

- Erfassen einer Temperatur der Materialprobe und/oder Temperieren der Materialprobe auf eine Vorgabetemperatur und
- Berücksichtigen der erfassten Temperatur und/oder der Vorgabetemperatur beim Ermitteln der frequenzabhängigen Brechungsindizes umfasst.

Bevorzugt ist also vorgesehen, dass die Temperatur der Materialprobe erfasst und/oder gesteuert und/oder geregelt werden kann. Derart ist es einerseits möglich die Temperatur während des Messvorganges konstant zu halten als auch die frequenzabhängigen Brechungsindizes bei unterschiedlichen Temperaturen der Materialprobe zu ermitteln.

Gemäß einer bevorzugten Weiterbildung der Erfindung ist vorgesehen, dass das Verfahren den Schritt Verändern einer Präzision des Ermittelns der frequenzabhängigen Brechungsindizes und/oder eines Frequenzbereiches, in dem die frequenzabhängigen Brechungsindizes ermittelt werden durch Variation des Abstandes des Detektors zur Austrittseite der Materialprobe umfasst. Bevorzugt entspricht der Frequenzbereich, in dem die frequenzabhängigen Brechungsindizes ermittelt werden, dem Frequenzbereich bzw. Wellenlängenbereich des Lichtes, das zum Ermitteln der frequenzabhängigen Brechungsindizes verwendet wird. In anderen Worten entspricht bevorzugt der Frequenzbereich, in dem die frequenzabhängigen Brechungsindizes ermittelt werden dem Arbeitsbereich des Lichtes. Durch das Verfahren ist es aber möglich, dass der Frequenzbereich in dem die frequenzabhängigen Brechungsindizes ermittelt werden, nicht dem Arbeitsbereich des Lichtes entsprechen muss, sondern vom Arbeitsbereich des Lichtes verschieden sein kann. Grundsätzlich ist es möglich, dass das Licht der Strahlungsquelle eine spektrale Intensitätsverteilung aufweist, die aus mehreren getrennten, schmalbandigen Spektren besteht. Der Arbeitsbereich des Lichtes weist in diesem Falle Frequenzlücken bei den Frequenzen auf, bei denen keine Intensität vorhanden ist. Trotzdem kann mit dem Verfahren auch innerhalb dieser Frequenzlücken im Arbeitsbereich des Lichtes die frequenzabhängigen Brechungsindizes bestimmt werden. In diesem Fall ist der Arbeitsbereich des Lichtes also kleiner als der Frequenzbereich, indem die frequenzabhängigen Brechungsindizes ermittelt werden. In anderen Worten kann durch Wahl der Strahlungsquelle der Arbeitsbereich verändert werden.

Weiterhin kann durch Variation des Abstandes zwischen dem Detektor und der Austrittseite der Materialprobe der Frequenzbereich, in dem die frequenzabhängigen Brechungsindizes ermittelt werden und/oder die Präzision beeinflusst werden. Über die Variation des Abstandes zwischen dem Detektor und der Austrittseite der Materialprobe kann das Verfahren an die jeweilige Anwendung angepasst werden. Sollen beispielsweis viele verschiedene Materialproben mit deutlichem Unterschied im Brechungsindex untersucht werden, kann der Frequenzbereich, bei dem die frequenzabhängigen Brechungsindizes ermittelt werden groß gewählt werden und ein geringer Abstand zwischen Austrittseite der Materialprobe und Detektor verwendet werden. Dies hat zur Folge, dass die Präzision des Ermittelns der frequenzabhängigen Brechungsindizes abnimmt. Soll hingegen eine Materialprobe besonders präzise vermessen werden, wird bevorzugt der Abstand zwischen Austrittseite der Materialprobe und Detektor vergrößert, so dass aufgrund der höheren Messauflösung im gewählten Frequenzbereich die Präzision des Ermittelns der frequenzabhängigen Brechungsindizes zunimmt..

Weiterer Vorteile und technische Merkmale des zum Bestimmen der frequenzabhängigen Brechungsindizes der Materialprobe, ergeben sich für den Fachmann aus der Beschreibung der Vorrichtung zur Durchführung des Verfahrens sowie aus der Beschreibung des Ausführungsbeispiels.

Weiterhin betrifft die Erfindung eine Vorrichtung zum Bestimmen frequenzabhängiger Brechungsindizes einer Materialprobe umfassend eine Strahlungsquelle zum Abstrahlen von kollimiertem, polychromatischem Licht mit einer spektralen Intensitätsverteilung, einen Materialprobenhalter zum Bereitstellen der Materialprobe, einen ortsauflösenden Detektor zum Erfassen einer räumlichen Intensitätsverteilung des Lichtes, wobei die Strahlungsquelle, der Probenhalter und der Detektor derart zueinander angeordnet sind und derart ausgestaltet sind, dass bei bereitgestellter Materialprobe das Licht der Strahlungsquelle durch die Materialprobe auf den Detektor trifft, wobei die Vorrichtung eine Recheneinheit eingerichtet zum Vergleichen der spektralen Intensitätsverteilung mit der räumlichen Intensitätsverteilung umfasst.

Der Kern der Erfindung liegt darin, dass die Vorrichtung zum Bestimmen der frequenzabhängigen Brechungsindizes kein Monochromator, und/oder kein Referenzprisma umfasst. Es sind also keine Vorrichtungen zur spektralen Isolierung einer bestimmten Wellenlänge der Strahlungsquelle oder zum referenzieren der Wellenlänge der Strahlungsquelle notwendig. Somit weist die Vorrichtung einen besonders einfachen und robusten Aufbau auf.

Insbesondere ist die Recheneinheit zum Anpassen der spektralen Intensitätsverteilung an die räumliche Intensitätsverteilung unter Berücksichtigung der Anordnung der Strahlungsquelle, der Materialprobe und des Detektors zueinander und der geometrischen Form der Materialprobe eingerichtet. Bevorzugt sind der Detektor und die Recheneinheit kommunikationstechnisch miteinander verbindbar und/oder miteinander verbunden.

Hinsichtlich des Detektors ist weiter bevorzugt vorgesehen, dass der ortsauflösende Detektor einen Zeilendetektor, einen CCD-Sensor und/oder einen CMOS-Sensor umfasst. Bevorzugt ist vorgesehen, dass eine Quanteneffizienz des Detektors kalibrierbar ist. Die Kalibrierung führt dazu, dass die vom Detektor erfassbare räumliche Intensitätsverteilung besonders präzise erfassbar ist. Weiter bevorzugt ist vorgesehen, dass der Detektor mehrere nebeneinander anordbaren Zeilendetektoren umfasst. Derart kann auf einfache und flexible Weise der Frequenzbereich indem die frequenzabhängigen Brechungsindizes ermittelt werden verändert werden.

Hinsichtlich der Strahlungsquelle ist bevorzugt vorgesehen, dass die Strahlungsquelle dazu ausgestaltet ist polychromatisches Licht abzustrahlen in dem Wellenlängenbereich bzw. Frequenzbereich bei dem die frequenzabhängigen Brechungsindizes ermittelt werden sollen. Grundsätzlich kann die Strahlungsquelle unterschiedlich ausgebildet sein, wobei die Strahlungsquelle bevorzugt verschiedenfarbige LEDs, Halogenlampen, Gasentladungsröhren, Weißlicht-, IR-, UV-Strahler und/oder eine Ulbricht-Kugel umfasst. Diese können auch kombiniert werden. Grundsätzlich ist es möglich, dass die Strahlungsquelle direkt kollimiertes Licht erzeugt. Bevorzugt umfasst die Vorrichtung allerdings zum kollimieren einen Kollimator, der zwischen Strahlungsquelle und dem Materialprobenhalter angeordnet ist. Weiter bevorzugt ist zwischen dem Kollimator und der Strahlungsquelle ein Diffusor vor einem Spalt vorgesehen. Dies hat den Vorteil, dass die Strahlungsquelle den Spalt nicht direkt ausleuchten muss, sondern auch in einem Winkel zum Spalt abstrahlen kann. Dies ermöglicht auf einfache Weise mehrere Strahlungsquellen zu verwenden. Bei der Ulbricht-Kugel als Strahlungsquelle kann bevorzugt auf den Diffusor verzichtet werden.

Hinsichtlich des Materialprobenhalters ist bevorzugt vorgesehen, dass der Materialprobenhalter eine beheizbare und/oder kühlbare Temperatur-Einheit umfasst. Derart kann die Materialprobe auf einfache Weise temperiert werden. In diesem Zusammenhang ist weiterhin vorgesehen, dass der Materialprobenhalter hermetisch abdichtbar ist und/oder dass der Materialprobenhalter eine Spülvorrichtung umfasst. Mittels der Spülvorrichtung kann auf einfache Weise verhindert werden, dass sich auf einer gekühlten Materialprobe Kondensat niederschlägt. Eine hermetisch abdichtbarer Materialprobenhalter hat den Vorteil, dass ein Gasaustausch verhindert werden kann und somit auch ein Wärmeaustausch verringert wird. In diesem Fall ist bevorzugt vorgesehen, dass der Materialprobenhalter lichtdurchlässige Fenster umfasst. Diese Fenster können auch in vorteilhafter Weise mit Wellenlängen-Filter ausrüstbar sein. Bevorzugt werden die spektralen Einflüsse analog zur Absorption und/oder den Fesnel'schen Reflexen bei der Ermittlung der frequenzabhängigen Brechungsindizes mittels der Recheneinheit berücksichtigt. Durch den hermetisch abdichtbaren Materialprobenhalter kann der Detektor auf einfache Weise vor Temperaturschwankungen, die durch das Beheizen oder Kühlen der Materialprobe verursacht werden, geschützt werden. Dies verbessert die Wiederholgenauigkeit der Vorrichtung und des Verfahrens.

Weiterhin ist bevorzugt vorgesehen, dass die Vorrichtung optische Linsen, Filter, Strahlteiler, optische Gitter, Spiegel und/oder ein Spektrometer umfasst. Besonders bevorzugt umfasst die Vorrichtung zwischen Materialprobenhalter und Detektor die Linse. Derart kann das Auflösungsvermögen und somit die Präzision auf einfache Art und Weise beeinflusst werden, zusätzlich und/oder als Alternative zur Detektorabstand. Weiter bevorzugt kann an dieser Stelle auch ein optisches Gitter zur Veränderung des Auflösungsvermögens eingesetzt werden. Zwischen Strahlungsquelle und Materialprobenhalter umfasst die Vorrichtung bevorzugt den Strahlteiler um einen Teil des Lichtes abzukoppeln und dem Spektrometer zuzuführen. Derart kann die spektrale Intensitätsverteilung besonders einfach ermittelt werden.

Nachfolgend wird die Erfindung unter Bezugnahme auf die Zeichnung anhand bevorzugter Ausführungsbeispiele exemplarisch erläutert.

In der Zeichnung zeigen

Fig. 1 eine schematische Darstellung einer Materialprobe an der ein Verfahren zum Bestimmen frequenzabhängiger Brechungsindizes der Materialprobe gemäß einer bevorzugten Ausführungsform der Erfindung durchgeführt wird,

Fig. 2 schematische Darstellungen einer spektralen Intensitätsverteilung, einer räumlichen Intensitätsverteilung und den mittels des Verfahrens ermittelten frequenzabhängiger Brechungsindizes der Materialprobe aus Figur 1 und

Fig. 3 zwei schematische Darstellungen unterschiedlicher Perspektive einer Vorrichtung zur Durchführung des Verfahrens zum Bestimmen der frequenzabhängiger Brechungsindizes gemäß einer bevorzugten Ausführungsform der Erfindung.

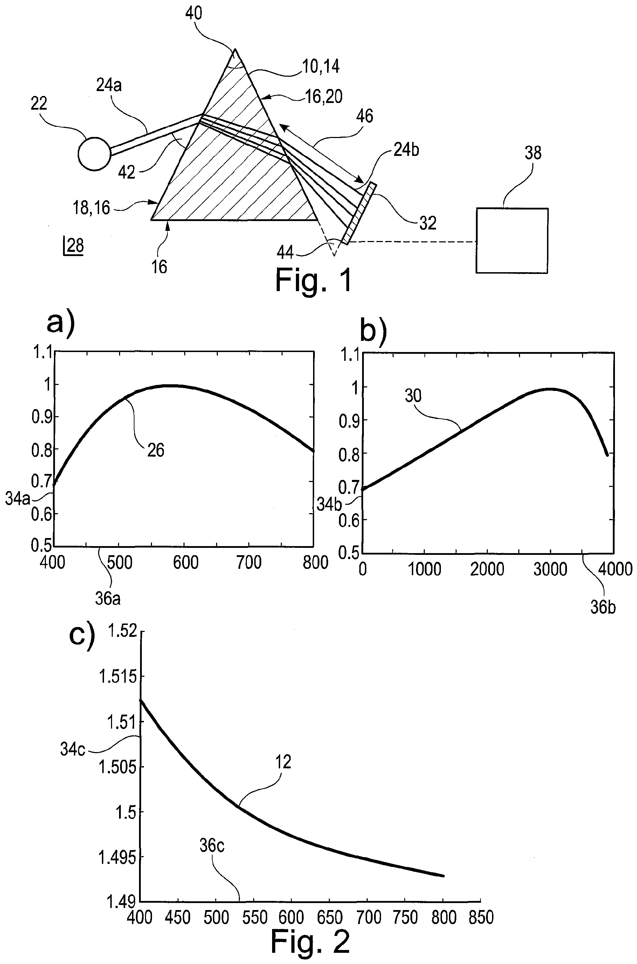

Figur 1 zeigt eine schematische Darstellung einer Materialprobe 10 an der ein Verfahren zum Bestimmen frequenzabhängiger Brechungsindizes 12 gemäß einer bevorzugten Ausführungsform der Erfindung durchgeführt wird. Im Folgenden werden unter Bezugnahme auf Figur 1 und 2 die Schritte des Verfahrens dargelegt.

In einem ersten Schritt des Verfahrens wird die Materialprobe 10 bereitgestellt. Vorliegend handelt es sich um eine feste Materialprobe 10 aus Kunststoff, die in der Form eines Prismas bereitgestellt wird. Wie in Figur 1 zu erkennen, weist das Prisma als Grundfläche 14 ein Dreieck auf. Zwei der drei Seitenflächen 16 des Prismas bilden eine Eintrittseite 18 und eine Austrittseite 20 der Materialprobe 10.

In einem weiteren Schritt des Verfahrens wird die Eintrittseite 18 der Materialprobe 10 mittels einer Strahlungsquelle 22 mit Licht 24 bestrahlt. Das Licht 24 ist kollimiert und polychromatisch 24a und weist eine spektrale Intensitätsverteilung 26 auf, die in Figur 2a) dargestellt ist. Vorliegend wird also Licht 24 eines Weißlichtstrahlers verwendet, das im in Figur 2 dargestellten Wellenlängenbereich zwischen 400 nm und 800 nm jeweils eine sich ändernde Intensität aufweist.

Wie in Figur 1 zu erkennen, breitet sich das kollimierte, polychromatische Licht 24a von der Strahlungsquelle 22 in der Ausbreitungsebne 28, was vorliegend der Zeicheneben entspricht, aus und tritt an der Eintrittseite 18 in die Materialprobe 10 ein. Als Folge davon tritt divergierendes Licht 24b an der Austrittseite 20 aus der Materialprobe 10 aus. Das divergierende Licht 24b spaltet hinter der Materialprobe 10 in seine Spektralfarben auf.

In einem weiteren Schritt des Verfahrens wird eine räumlichen Intensitätsverteilung 30 des sich in der Ausbreitungsebne 28 divergierenden Lichtes 24b erfasst. Dafür wird ein in der Ausbreitungsebne 28 ortsaulösender Detektor 32 verwendet. Vorliegend handelt es sich um einen Zeilendetektor 32. Der Detektor 32 ist dazu ausgestaltet, die Intensität des divergierenden Lichtes 24b ortsaufgelöst zu erfassen. Die in diesem bevorzugten Ausführungsbeispiel erfasste räumliche Intensitätsverteilung 30 ist in Figur 2b) dargestellt, wobei der Detektor von der Pixelposition 0 bist zur Pixelposition 4000 eine sich ändernde Intensität festgestellt hat.

In Figur 2a) und 2b) sind also zwei Intensitätsverteilungen 26 und 30 abgebildet, wobei in Figur 2a) die spektrale Intensitätsverteilung 26 des Lichtes 24a und in Figur 2b) die räumliche Intensitätsverteilung 26 des Lichtes 24b dargestellt ist. Auf den y-Achsen 34a und 34b in den Figur 2a) und 2b) ist jeweils die normierte Intensität des Lichtes aufgetragen. Auf der x-Achse 36a in Figur 2a) ist die Wellenlänge in nm aufgetragen. Auf der x-Achse 36b in Figur 2b) ist der Detektionsort auf dem Detektor 32 in Pixelpositionen aufgetragen.

In einem weiteren Schritt des Verfahrens werden mittels einer Recheneinheit 38 durch Vergleichen der spektralen Intensitätsverteilung 26 mit der erfassten räumlichen Intensitätsverteilung 30 die frequenzabhängigen Brechungsindizes 12 der Materialprobe 10 ermittelt, wobei dabei die geometrischen Form der Materialprobe 10, und die Anordnung der Strahlungsquelle 22, der Materialprobe 10 und des Detektors 32 zueinander berücksichtig werden. Im vorliegenden Ausführungsbeispiel wird die Form der spektralen Intensitätsverteilung 26 mit der Form der räumlichen Intensitätsverteilung 30 verglichen. Weiterhin wird hinsichtlich der geometrischen Form der Materialprobe 10, ein Winkel 40 zwischen der Eintrittseite 18 und der Austrittseite 20 der Materialprobe 10 berücksichtig. Hinsichtlich der Anordnung der Strahlungsquelle 22, der Materialprobe 10 und des Detektors 32 zueinander, wird ein Einfallswinkel 42 und ein Detektorwinkel 44 berücksichtig. Der Einfallswinkel 42 ist der Winkel indem das Licht 24a in der Ausbreitungsebene 28 mit auf die Eintrittseite 18 der Materialprobe 10 trifft. Der Detektorwinkel 44 ist der Winkel zwischen der Austrittseite 20 der Materialprobe 10 und der Raumrichtung, in der der Detektor 32 ortsauflösend ist. Weiterhin wird ein Abstand 46 des Detektors 32 zur Austrittseite 20 der Materialprobe 10 berücksichtig.

Figur 2c) stellt die durch das Verfahren ermittelt frequenzabhängigen Brechungsindizes 12 dar. Auf der y-Achsen 34c ist der Brechungsindex der Materialprobe 10 aufgetragen. Auf der x-Achse 36c ist die Wellenlänge in nm aufgetragen.

Im hier bevorzugten Ausführungsbeispiel ermittelt das Verfahren die frequenzabhängigen Brechungsindizes 12 mittels Anpassen der freien Parameter, $B_0$, $B_1$, $B_2$, der folgenden Gleichung (5), wobei die Parameter $B_0$, $B_1$, $B_2$, derart angepasst werden, dass eine auf Basis der spektralen Intensitätsverteilung 26 errechnete virtuelle räumliche Intensitätsverteilung 30' (nicht dargestellt) mit der erfassten räumlichen Intensitätsverteilung 30 im Wesentlichen über-einstimmt:

$$n(\lambda) = B_0 + \frac{B_1}{\lambda^2} + \frac{B_2}{\lambda^4} \hspace{3cm} (2)$$

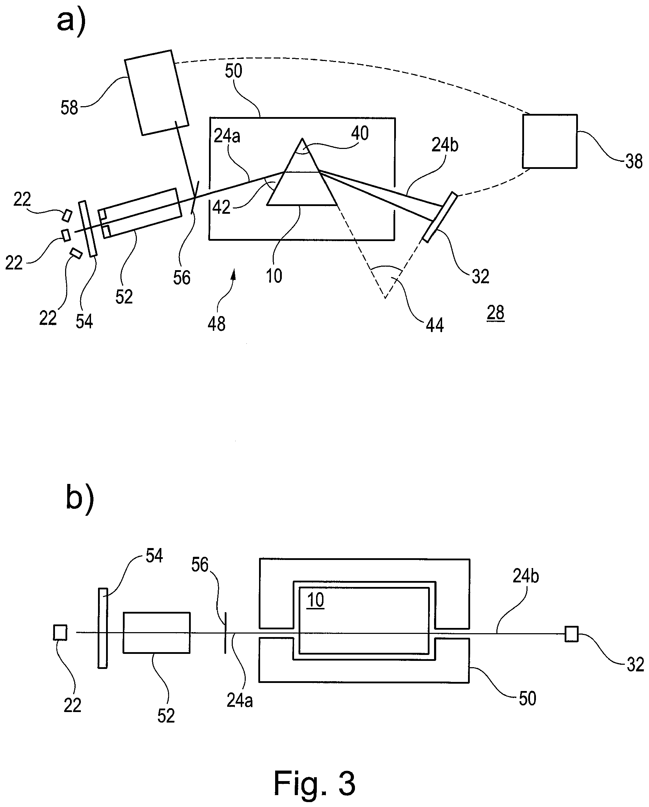

Figur 3 zeigt zwei schematische Darstellungen unterschiedlicher Perspektive einer Vorrichtung 48 zur Durchführung des beschriebenen Verfahrens, gemäß einer bevorzugten Ausführungsform der Erfindung, wobei Figur 3a) die Vorrichtung 48 in Draufsicht und Figur 3b) in Seitenansicht darstellt. Die Vorrichtung 48 umfasst vorliegend die Strahlungsquelle 22, einen Materialprobenhalter 50 zum Bereitstellen der Materialprobe 10, den ortsauflösenden Detektor 32 zum Erfassen der räumlichen Intensitätsverteilung 30 des Lichtes 24b, und die Recheneinheit 38, die zum Vergleichen der spektralen Intensitätsverteilung 26 mit der räumlichen Intensitätsverteilung 30 eingerichtet ist. Im vorliegenden Ausführungsbeispiel ist der Materialprobenhalters 50 beheiz- und kühlbar.

Weiterhin umfasst die Vorrichtung 48 zum kollimieren des Lichtes der Strahlungsquelle 22 einen Kollimator 52, der zwischen Strahlungsquelle 22 und dem Materialprobenhalter 50 angeordnet ist. Ebenfalls umfasst die Vorrichtung in diesem bevorzugten Ausführungsbeispiel einen Diffusor 54, der vor einem Spalt des Kollimators 52 angeordnet ist. Die Strahlungsquelle 22 wird vorliegend durch drei LEDs umgesetzt, wobei eine LED spektral breitbandiges Weißlicht abstrahlt und die anderen zwei LEDs spektral schmalbandiges blaues und rotes Licht.

In Figur 3 ist weiterhin ersichtlich, dass in diesem Ausführungsbeispiel zwischen Kollimator 52 und Materialprobenhalter 50 ein Auskopplungsspiegel 56 im Strahlengang angeordnet ist, womit ein Anteil des Lichtes 24a einem Spektrometer 58 zugeführt wird. Mittels des Spektrometers 58 wird vorliegend die spektrale Intensitätsverteilung 26 ermittelt. Das Spektrometer 58 sowie der Detektor 32 sind kommunikationstechnisch mit der Recheneinheit 38 verbunden.

Bezugszeichenliste

| | |
|---|---|
| 10 | Materialprobe |
| 12 | frequenzabhängige Brechungsindizes, Dispersion |
| 14 | Grundfläche |
| 16 | Seitenflächen |
| 18 | Eintrittseite |
| 20 | Austrittseite |
| 22 | Strahlungsquelle |
| 24a | kollimiertes, polychromatisches Licht |
| 24b | divergierendes Licht |
| 26 | spektrale Intensitätsverteilung |
| 28 | Ausbreitungsebene |
| 30 | räumlichen Intensitätsverteilung |

| | |
|---|---|
| 32 | Detektor, Zeilendetektor |
| 34a | y-Achse, normierte Intensität |
| 34b | y-Achse, normierte Intensität |
| 34c | y-Achse, Brechungsindex |
| 36a | x-Achse, Wellenlänge in nm |
| 36b | x-Achse, Detektionsort in Pixelposition |
| 36c | x-Achse, Wellenlänge in nm |
| 38 | Recheneinheit |
| 40 | Winkel zwischen Eintrittseite und Austrittseite |
| 42 | Einfallswinkel |
| 44 | Detektorwinkel |
| 46 | Abstand |
| 48 | Vorrichtung |
| 50 | Materialprobenhalter |
| 52 | Kollimator |
| 54 | Diffusor |
| 56 | Auskopplungsspiegel |
| 58 | Spektrometer |

**Patentansprüche**

1. Verfahren zum Bestimmen frequenzabhängiger Brechungsindizes (12) einer Materialprobe (10), umfassend die Schritte

   a) Bereitstellen der Materialprobe (10), wobei die Materialprobe (10) wenigstens eine Eintrittseite (18) und eine Austrittseite (20) aufweist,
   b) Bestrahlen der Eintrittseite (18) mit kollimiertem, polychromatischem Licht (24a) aufweisend eine spektrale Intensitätsverteilung (26) mittels einer Strahlungsquelle (22),
   c) Erfassen einer räumlichen Intensitätsverteilung (30) des Lichtes (24b) auf der Austrittseite (20) mittels eines in einer Ausbreitungsebene (28) ortsauflösenden Detektors (32),
   d) Ermitteln der frequenzabhängigen Brechungsindizes (12) der Materialprobe (10) durch Vergleichen der spektralen Intensitätsverteilung (26) mit der erfassten räumlichen Intensitätsverteilung (30) mittels einer Recheneinheit (38) unter Berücksichtigung einer geometrischen Form der Materialprobe (10) und einer Anordnung der Strahlungsquelle (22), der Materialprobe (10) und des Detektors (32) zueinander.

2. Verfahren nach Anspruch 1, wobei der Schritt a) Bereitstellen der Materialprobe (10), ein Bereitstellen einer Materialprobe (10) in Form eines Prismas aufweisend ein Vieleck als Grundfläche (14) umfasst, wobei die Eintritt- (18) und Austrittseite (20) der Materialprobe (10) jeweils von einer Seitenfläche (16) des Prismas gebildet ist.

3. Verfahren nach Anspruch 1 oder 2, wobei das Verfahren den Schritt Anordnen der Strahlungsquelle (22), der Materialprobe (10) und/oder des Detektors (32) derart, dass das Licht (24b) auf den Detektor (32) trifft, umfasst.

4. Verfahren nach einem der vorherigen Ansprüche, wobei das Verfahren den Schritt Erfassen der spektralen Intensitätsverteilung (26) des Lichtes (24a) auf der Eintrittseite (18), mittels eines Spektrometers (58) umfasst.

5. Verfahren nach einem der vorherigen Ansprüche, wobei das Verfahren den Schritt Übertragen der erfassten räumlichen Intensitätsverteilung (30) an die Recheneinheit (38) umfasst.

6. Verfahren nach einem der vorherigen Ansprüche, wobei das Verfahren den Schritt Speichern der ermittelten frequenzabhängigen Brechungsindizes (12) auf einem Speichermedium umfasst.

7. Verfahren nach einem der vorherigen Ansprüche, wobei der Schritt d) Ermitteln der frequenzabhängigen Brechungsindizes (12) der Materialprobe (10) durch Vergleichen der spektralen Intensitätsverteilung (26) mit der erfassten räumlichen Intensitätsverteilung (30) mittels der Recheneinheit (38) unter Berücksichtigung der geometrischen Form der Materialprobe (10) und der Anordnung der Strahlungsquelle (22), der Materialprobe (10) und des Detektors (32) zueinander ein Durchführen einer Ausgleichsrechnung umfasst.

**8.** Verfahren nach einem der vorherigen Ansprüche, wobei der Schritt d) Ermitteln der frequenzabhängigen Brechungsindizes (12) der Materialprobe (10) durch Vergleichen der spektralen Intensitätsverteilung (26) mit der erfassten räumlichen Intensitätsverteilung (30) mittels der Recheneinheit (38) unter Berücksichtigung der geometrischen Form der Materialprobe (10) und der Anordnung der Strahlungsquelle (22), der Materialprobe (10) und des Detektors (32) zueinander ein Anpassen freier Parameter einer parametrischen Beschreibung des frequenzabhängigen Brechungsindex (12) derart, dass eine auf Basis der spektralen Intensitätsverteilung (26) errechneten virtuellen räumlichen Intensitätsverteilung mit der erfassten räumlichen Intensitätsverteilung (30) im Wesentlichen übereinstimmt, umfasst.

**9.** Verfahren nach dem vorherigen Anspruch, wobei die parametrische Beschreibung des frequenzabhängigen Brechungsindex (12) die Cauchy-Gleichung, die Sellmeier-Gleichung, die Schott-Briot-Gleichung und/oder das Modell des Lorentz-Oszillators umfasst.

**10.** Verfahren nach einem der vorherigen Ansprüche, wobei der Schritt d) Ermitteln der frequenzabhängigen Brechungsindizes (12) der Materialprobe (10) durch Vergleichen der spektralen Intensitätsverteilung (26) mit der erfassten räumlichen Intensitätsverteilung (30) mittels der Recheneinheit (38) unter Berücksichtigung der geometrischen Form der Materialprobe (10) und der Anordnung der Strahlungsquelle (22), der Materialprobe (10) und des Detektors (32) zueinander ein Anpassen von Parametern der Anordnung der Strahlungsquelle (22), der Materialprobe (10) und des Detektors (32) zueinander und/oder der Form der Materialprobe (10) umfasst.

**11.** Verfahren nach einem der vorherigen Ansprüche, wobei das Verfahren den Schritt Bestrahlen der Eintrittseite (18) mit kollimiertem, monochromatischem Licht umfasst, und/oder, wobei das Verfahren die Schritte - Erfassen einer Absorption des Lichtes (24) durch die Materialprobe (10) und

- Berücksichtigen der erfassten Absorption beim Ermitteln der frequenzabhängigen Brechungsindizes (12) umfasst.

**12.** Verfahren nach einem der vorherigen Ansprüche, wobei beim Ermitteln der frequenzabhängigen Brechungsindizes (12) ein Reflexions- und/oder Transmissionsgrad des Lichtes (24) an der Eintrittseite (18) und/oder Austrittseite (20) und/oder eine Weglänge des Lichtes (24) innerhalb der Materialprobe (10) berücksichtigt wird.

**13.** Verfahren nach einem der vorherigen Ansprüche, wobei das Verfahren die Schritte

- Erfassen einer Temperatur der Materialprobe (10) und/oder Temperieren der Materialprobe (10) auf eine Vorgabetemperatur und
- Berücksichtigen der erfassten Temperatur und/oder der Vorgabetemperatur beim Ermitteln der frequenzabhängigen Brechungsindizes (12) umfasst.

**14.** Verfahren nach einem der vorherigen Ansprüche, wobei das Verfahren den Schritt Verändern einer Präzision des Ermittelns der frequenzabhängigen Brechungsindizes (12) und/oder eines Frequenzbereiches in dem die frequenzabhängigen Brechungsindizes (12) ermittelt werden durch Variation eines Abstandes (46) des Detektors (32) zur Austrittseite (20) der Materialprobe (10) umfasst.

**15.** Vorrichtung (48) zur Durchführung des Verfahrens zum Bestimmen frequenzabhängiger Brechungsindizes (12) einer Materialprobe (10) gemäß einem der vorherigen Ansprüche umfassend eine Strahlungsquelle (22) zum Abstrahlen von polychromatischem Licht (24) mit einer spektralen Intensitätsverteilung (26), einen Materialprobenhalter (50) zum Bereitstellen der Materialprobe (10), einen ortsauflösenden Detektor (32) zum Erfassen einer räumlichen Intensitätsverteilung (30) des Lichtes (24), wobei die Strahlungsquelle (22), der Materialprobenhalter (50) und der Detektor (32) derart zueinander angeordnet sind und derart ausgestaltet sind, dass bei bereitgestellter Materialprobe (10) das Licht (24) der Strahlungsquelle (22) durch die Materialprobe (10) auf den Detektor (32) trifft, wobei die Vorrichtung (48) eine Recheneinheit (38) eingerichtet zum Vergleichen der spektralen Intensitätsverteilung (26) mit der räumlichen Intensitätsverteilung (30) umfasst.

## Claims

**1.** Method for determining frequency-dependent refractive indices (12) of a material sample (10), comprising the steps of:

a) providing the material sample (10), wherein the material sample (10) comprises at least one entry side (18) and one exit side (20);

b) irradiating the entry side (18) with collimated, polychromatic light (24a) having a spectral intensity distribution (26) by means of a radiation source (22);

c) detecting a spatial intensity distribution (30) of the light (24b) at the exit side (20) by means of a detector (32) with spatial resolution in a propagation plane (28);

d) determining the frequency-dependent refractive indices (12) of the material sample (10) by comparing the spectral intensity distribution (26) with the detected spatial intensity distribution (30) by means of a computing unit (38), taking into account a geometric shape of the material sample (10) and an arrangement of the radiation source (22), the material sample (10) and the detector (32) relative to one another.

2. Method according to claim 1, wherein step a) providing the material sample (10), comprises providing a material sample (10) in the form of a prism having a polygon as a base surface (14), wherein the entry side (18) and the exit side (20) of the material sample (10) are each formed by a side face (16) of the prism.

3. Method according to claim 1 or 2, wherein the method comprises the step of arranging the radiation source (22), the material sample (10) and/or the detector (32) such that the light (24b) hits on the detector (32).

4. Method according to any one of the preceding claims, wherein the method comprises the step of detecting the spectral intensity distribution (26) of the light (24a) at the entry side (18), by means of a spectrometer (58).

5. Method according to any one of the preceding claims, wherein the method comprises the step of transmitting the detected spatial intensity distribution (30) to the computing unit (38).

6. Method according to any one of the preceding claims, wherein the method comprises the step of storing the determined frequency-dependent refractive indices (12) on a storage medium.

7. Method according to any one of the preceding claims, wherein step d) determining the frequency-dependent refractive indices (12) of the material sample (10) by comparing the spectral intensity distribution (26) with the detected spatial intensity distribution (30) by means of the computing unit (38), taking into account the geometric shape of the material sample (10) and the arrangement of the radiation source (22), the material sample (10) and the detector (32) relative to one another, comprises performing an equalization calculation.

8. Method according to any one of the preceding claims, wherein step d) determining the frequency-dependent refractive indices (12) of the material sample (10) by comparing the spectral intensity distribution (26) with the detected spatial intensity distribution (30) by means of the computing unit (38), taking into account the geometric shape of the material sample (10) and the arrangement of the radiation source (22), the material sample (10) and the detector (32) relative to one another, comprises adapting free parameters of a parametric description of the frequency-dependent refractive index (12) in such a way that a virtual spatial distribution calculated on the basis of the spectral intensity distribution (26) substantially coincides with the detected spatial intensity distribution (30).

9. Method according to the preceding claim, wherein the parametric description of the frequency-dependent refractive index (12) comprises the Cauchy equation, the Sellmeier equation, the Schott-Briot equation and/or the model of the Lorentz oscillator.

10. Method according to any one of the preceding claims, wherein step d) determining the frequency-dependent refractive indices (12) of the material sample (10) by comparing the spectral intensity distribution (26) with the detected spatial intensity distribution (30) by means of the computing unit (38), taking into account the geometric shape of the material sample (10) and the arrangement of the radiation source (22), the material sample (10) and the detector (32) relative to one another, comprises adapting parameters of the arrangement of the radiation source (22), the material sample (10) and the detector (32) with respect to each other and/or the shape of the material sample (10).

11. Method according to any one of the preceding claims, wherein the method comprises the step of irradiating the entry side (18) with collimated, monochromatic light, and/or wherein the method comprises the steps of

- detecting an absorption of the light (24) by the material sample (10); and
- taking into account the detected absorption in determining the frequency-dependent refractive indices (12).

**12.** Method according to any one of the preceding claims, wherein a degree of reflection and/or transmission of the light (24) at the entry side (18) and/or exit side (20) and/or a path length of the light (24) within the material sample (10) is taken into account in determining the frequency-dependent refractive indices (12).

**13.** Method according to any one of the preceding claims, wherein the method comprises the steps of

- detecting a temperature of the material sample (10) and/or tempering the material sample (10) to a preset temperature; and
- taking into account the detected temperature and/or the preset temperature in determining the frequency-dependent refractive indices (12).

**14.** Method according to any one of the preceding claims, wherein the method comprises the step of changing a precision of the determination of the frequency-dependent refractive indices (12) and/or a frequency range in which the frequency-dependent refractive indices (12) are determined by varying a distance (46) of the detector (32) to the exit side (20) of the material sample (10).

**15.** Device (48) for carrying out the method for determining frequency-dependent refractive indices (12) of a material sample (10) according to any one of the preceding claims, comprising:

a radiation source (22) for emitting polychromatic light (24) with a spectral intensity distribution (26);
a material sample holder (50) for providing the material sample (10);
a spatially resolving detector (32) for detecting a spatial intensity distribution (30) of the light (24),
wherein the radiation source (22), the material sample holder (50) and the detector (32) are arranged relative to one another and are designed in such a way that, when the material sample (10) is provided, the light (24) from the radiation source (22) hits on the detector (32) through the material sample (10),
wherein the device (48) comprises a computing unit (38) arranged to compare the spectral intensity distribution (26) with the spatial intensity distribution (30).


**Revendications**

**1.** Procédé de détermination d'indices de réfraction (12) dépendants de la fréquence d'un échantillon de matériau (10), comprenant les étapes de

a) fourniture de l'échantillon de matériau (10), l'échantillon de matériau (10) comportant au moins un côté d'entrée (18) et un côté de sortie (20),
b) irradiation du côté d'entrée (18) avec une lumière polychromatique collimatée (24a) présentant une distribution d'intensité spectrale (26) au moyen d'une source de rayonnement (22),
c) détection d'une distribution d'intensité spatiale (30) de la lumière (24b) du côté sortie (20) au moyen d'un détecteur (32) à résolution spatiale dans un plan de propagation (28),
d) détermination des indices de réfraction (12) dépendants de la fréquence de l'échantillon de matériau (10) en comparant la distribution d'intensité spectrale (26) avec la distribution d'intensité spatiale (30) détectée au moyen d'une unité de calcul (38), compte tenu d'une forme géométrique de l'échantillon de matériau (10) et d'un agencement de la source de rayonnement (22), de l'échantillon de matériau (10) et du détecteur (32) les uns par rapport aux autres.

**2.** Procédé selon la revendication 1, dans lequel l'étape a) de fourniture de l'échantillon de matériau (10) comprend une fourniture d'un échantillon de matériau (10) sous la forme d'un prisme comportant un polygone comme surface de base (14), les côtés d'entrée (18) et de sortie (20) de l'échantillon de matériau (10) étant chacun formé par une surface latérale (16) du prisme.

**3.** Procédé selon la revendication 1 ou 2, dans lequel le procédé comprend l'étape d'agencement de la source de rayonnement (22), de l'échantillon de matériau (10) et/ou du détecteur (32) de telle sorte que la lumière (24b) frappe le détecteur ( 32).

**4.** Procédé selon l'une des revendications précédentes, dans lequel le procédé comprend l'étape de détection de la distribution d'intensité spectrale (26) de la lumière (24a) du côté entrée (18) au moyen d'un spectromètre (58).

**5.** Procédé selon l'une des revendications précédentes, dans lequel le procédé comprend l'étape de transmission de la distribution d'intensité spatiale (30) détectée à l'unité de calcul (38).

**6.** Procédé selon l'une des revendications précédentes, dans lequel le procédé comprend l'étape de stockage des indices de réfraction (12) dépendants de la fréquence déterminés sur un support de stockage.

**7.** Procédé selon l'une des revendications précédentes, dans lequel l'étape d) de détermination des indices de réfraction (12) dépendants de la fréquence de l'échantillon de matériau (10) en comparant la distribution d'intensité spectrale (26) avec la distribution d'intensité spatiale (30) détectée au moyen de l'unité de calcul (38), compte tenu de la forme géométrique de l'échantillon de matériau (10) et de la disposition de la source de rayonnement (22), de l'échantillon de matériau (10) et du détecteur (32) les uns par rapport aux autres comprend la réalisation d'un calcul de compensation.

**8.** Procédé selon l'une des revendications précédentes, dans lequel l'étape d) de détermination des indices de réfraction (12) dépendants de la fréquence de l'échantillon de matériau (10) en comparant la distribution d'intensité spectrale (26) avec la distribution d'intensité spatiale (30) détectée au moyen de l'unité de calcul (38), compte tenu de la forme géométrique de l'échantillon de matériau (10) et de la disposition de la source de rayonnement (22), de l'échantillon de matériau (10) et du détecteur (32) les uns par rapport aux autres comprend une adaptation de paramètres libres d'une description paramétrique de l'indice de réfraction dépendant de la fréquence (12), de telle sorte que la distribution d'intensité spatiale virtuelle calculée sur la base de la distribution d'intensité spectrale (26) corresponde essentiellement à la distribution d'intensité spatiale (30) détectée.

**9.** Procédé selon la revendication précédente, dans lequel la description paramétrique de l'indice de réfraction dépendant de la fréquence (12) comprend l'équation de Cauchy, l'équation de Seilmeier, l'équation de Schott-Briot et/ou le modèle de l'oscillateur de Lorentz.

**10.** Procédé selon l'une des revendications précédentes, dans lequel l'étape d) de détermination des indices de réfraction (12) dépendants de la fréquence de l'échantillon de matériau (10) en comparant la distribution d'intensité spectrale (26) avec la distribution d'intensité spatiale (30) détectée au moyen de l'unité de calcul (38), compte tenu de la forme géométrique de l'échantillon de matériau (10) et de la disposition de la source de rayonnement (22), de l'échantillon de matériau (10) et du détecteur (32) les uns par rapport aux autres comprend une adaptation de paramètres de l'agencement de la source de rayonnement (22), de l'échantillon de matériau (10) et du détecteur (32) les uns par rapport aux autres et/ou de la forme de l'échantillon de matériau (10).

**11.** Procédé selon l'une des revendications précédentes, dans lequel le procédé comprend l'étape d'irradiation du côté entrée (18) avec une lumière monochromatique collimatée et/ou dans lequel le procédé comprend l'étape de - détection d'une absorption de la lumière (24) par l'échantillon de matériau (10) et

- de prise en compte de l'absorption détectée lors de la détermination des indices de réfraction dépendants de la fréquence (12).

**12.** Procédé selon l'une des revendications précédentes, dans lequel lors de la détermination des indices de réfraction (12) dépendants de la fréquence, un degré de réflexion et/ou de transmission de la lumière (24) du côté entrée (18) et/ou du côté sortie (20) et/ou une longueur de trajet de la lumière (24) au sein de l'échantillon de matériau (10) est pris en compte.

**13.** Procédé selon l'une des revendications précédentes, dans lequel le procédé comprend les étapes de

- détection d'une température de l'échantillon de matériau (10) et/ou tempérage de l'échantillon de matériau (10) à une température spécifiée et
- prise en compte de la température détecté et/ou de la température spécifiée lors de la détermination des indices de réfraction (12) dépendants de la fréquence.

**14.** Procédé selon l'une des revendications précédentes, dans lequel le procédé comprend l'étape de modification d'une précision de la détermination des indices de réfraction (12) dépendants de la fréquence et/ou d'une plage de fréquences dans laquelle les indices de réfraction dépendants de la fréquence sont déterminés en faisant varier une distance (46) du détecteur (32) jusqu'au côté sortie (20) de l'échantillon de matériau (10).

**15.** Dispositif (48) pour la mise en oeuvre du procédé de détermination des indices de réfraction (12) dépendants de la fréquence d'un échantillon de matériau (10) selon l'une quelconque des revendications précédentes, comprenant une source de rayonnement (22) pour émettre une lumière polychromatique (24) avec une distribution d'intensité spectrale (26), un porte-échantillon de matériau (50) pour fournir l'échantillon de matériau (10), un détecteur à résolution spatiale (32) pour détecter une distribution d'intensité spatiale (30) de la lumière (24), la source de rayonnement (22), le porte-échantillon de matériau (50) et le détecteur (32) étant agencés les uns par rapport aux autres et conçus de telle manière que lorsque l'échantillon de matériau (10) est fourni, la lumière (24) de la source de rayonnement (22) frappe le détecteur (32) à travers l'échantillon de matériau (10), le dispositif (48) comportant une unité de calcul (38) configurée pour comparer la distribution d'intensité spectrale (26) avec la distribution d'intensité spatiale (30).

Fig. 1

Fig. 2

a)

b)

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2483102 A
- GB 2487311 A

- WO 0229358 A1